# EUROPEAN PATENT SPECIFICATION

(11) **EP 0 594 142 B1**
(45) Date of publication and mention of the grant of the patent: **12.08.1998**
(21) Application number: 93116905.6
(22) Date of filing: 20.10.1993
(51) Int. Cl.: C08L 57/12, C09D 157/12

(54) **Curable carbamate-functional polymer composition**
Härtbare carbamat-funktionelle Polymerzusammensetzung
Composition de polymère durcissable à function carbamate

(30) Priority: 23.10.1992 US 965509
(43) Date of publication of application: 27.04.1994
(73) Proprietor: BASF CORPORATION, Parsippany, NJ 07054 (US)
(72) Inventor: Rehfuss, John W., West Bloomfield, Michigan 48322 (US); St. Aubin, Donald L., Westland, Michigan 48185 (US)
(74) Representative: Münch, Volker, Dr.

(56) References cited:
- EP-A- 0 365 098
- EP-A- 0 433 106
- JP-A-63 162 768
- US-A- 4 279 833

## Description

### Field of the Invention

This invention relates to curable compositions, especially curable coating compositions, particularly acrylic compositions.

### Background of the Invention

Polyurethane compositions for coating and/or molding are well-known in the art. They provide a number of desirable characteristics such as resistance to solvent, salt, and other types of environmental attack.

However, polyurethanes do suffer some disadvantages. An essential building block of a polyurethane is the polyisocyanate. Polyisocyanates are expensive and difficult to handle. The NCO groups on the polyisocyanate are highly reactive, so they must be chemically blocked if it is desired to use the polyisocyanate in a one-pack coating composition. The use of chemical blocking groups further increases the expense of the material, introduces an additional component into the composition that can have the potential for adverse side-effects, and necessitates a high heat curing temperature on the order of 150°C. If the NCO groups are not chemically blocked, the polyisocyanate must be utilized as one part of a two-pack composition. With such a composition, the highly-reactive polyisocyanate must be kept isolated from the surrounding environment and from the other component(s) of the composition until just before application to a substrate or mold, further increasing the expense and complexity of the process.

It has thus long been desired to produce compositions that provide the advantages of polyurethanes without the accompanying disadvantages of the polyisocyanate starting materials. One approach to this has been to append a carbamate group onto a polymer backbone, as seen in U.S. Patent 3,479,328. This patent describes unsaturated carbamyloxy carboxylates where a carbamate group is appended to the ester portion of an acrylic monomer, which is polymerized. The patent teaches that the polymers may be cross-linked by first alkylolating or etherifying the amino group of the carbamate functionality, and then self-crosslinking at temperatures of 100-135°C. Alternatively, the alkylolated polymer can be reacted with any of the known cross-linking agents for alkylol-containing polymers. This alkylolating step further increases the expense and complexity of utilizing the carbamate acrylic polymers in a curable composition, and may also affect the reactivity of the functional group as well as other chemical characteristics of the polymer.

The European patent application No. 0 433 106 discloses crosslinkable compositions containing copolymers having secondary carbamate groups appended to the polymer backbone via divalent linking groups. Alkylated and non-alkylated melamin resins, isocyanates, and anhydrides can be used as the crosslinking agents for the copolymers. However, the substituents on the nitrogen atoms of the carbamate groups obligatorily contain hydroxyl groups which groups participate in the crosslinking causing the formation of ether linkages within the crosslinked matrix. These ether linkages, however, are susceptible to hydrolysis and, therefore, have an adverse impact on the properties of the cured material.

The Japanese patent application JP63162768 discloses primary or secondary carbamate group containing copolymers prepared by the copolymerization of, for example, alkylcarbamoyloxyalkyl (meth)acrylates with copolymerizable monomers. However, this reference is silent about the crosslinking agents to be used.

The European patent application No. 0 365 098 describes coating compositions comprising watersoluble acrylic resins modified with a monofunctional isocyanate compound as the binders and conventional aminoplasts as the crosslinking agents. However, the said modification is only yielding secondary carbamate groups appended to the polymer backbone carrying on the carbamate nitrogen either substituted alkyl or cycloalkyl groups or unsubstituted alkyl groups of 8 to 25, preferably 18, carbon atoms.

### Summary of the Invention

It has now been discovered that carbamate-functional acrylic polymers can be used in curable compositions without the need for the alkylolating or etherifying step required in the prior art. Thus, according to the present invention, there is provided a curable composition comprising:
(a) a first component comprising a carbamate group-containing polymer according to the formula: 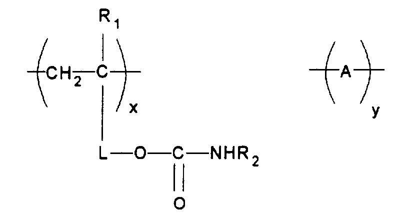 wherein R₁ represents H or CH₃, L represents a divalent linking group
   - R₂ represents H , unsubstituted alkyl or cycloalkyl, or alkyl or cylcoalkyl substituted with substituents that do not form ether linkages upon reaction of components (a) and (b),
   - A represents repeat units derived from one or more other ethylenically-unsaturated monomers, x represents 10 to 90 weight percent, and y represents 90 to 10 weight percent with x + y equal to 100 weight percent, and
(b) a second component comprising a compound having a plurality of functional groups that are reactive with said carbamate group.

The composition of the invention, when cured, provides a material having urethane-type cross-link bonds, but without the need for polyisocyanate compounds. The composition can be cured without the need for alkylolating or etherifying the polymer.

### Description of the Preferred Embodiments

The polymer component (a) used in the composition of the invention can be prepared in a variety of ways. One way to prepare such polymers is to prepare an acrylic monomer having a carbamate functionality in the ester portion of the monomer. Such monomers are wellknown in the art and are described, for example in U.S. patents 3,479,328, 3,674,838, 4,126,747, 4,279,833, and 4,340,497. One method of synthesis involves reaction of a hydroxy ester with urea to form the carbamyloxy carboxylate (i.e., carbamate-modified acrylic). Another method of synthesis reacts an α,β-unsaturated acid ester with a hydroxy carbamate ester to form the carbamyloxy carboxylate. Yet another technique involves formation of a hydroxyalkyl carbamate by reacting a primary or secondary amine or diamine with a cyclic carbonate such as ethylene carbonate. The hydroxyl group on the hydroxyalkyl carbamate is then esterified by reaction with acrylic or methacrylic acid to form the monomer. Other methods of preparing carbamate-modified acrylic monomers are described in the art, and can be utilized as well. The acrylic monomer can then be polymerized along with other ethylenically-unsaturated monomers, if desired, by techniques well-known in the art. An alternative route for preparing the polymer (a) used in the composition of the invention is to react an already-formed acrylic polymer with another component to form a carbamate-functional group appended to the polymer backbone, as described in U.S. Patent 4,758,632. One technique for preparing polymers useful as component (a) involves thermally decomposing urea (to give off ammonia and HNCO) in the presence of a hydroxy-functional acrylic polymer to form a carbamate-functional acrylic polymer. Another technique involves reacting the hydroxyl group of a hydroxyalkyl carbamate with the isocyanate group of an isocyanate-functional acrylic or vinyl monomer to form the carbamate-functional acrylic. Isocyanate-functional acrylics are known in the art and are described, for example in U.S. Patent 4,301,257. Isocyanate vinyl monomers are well-known in the art and include unsaturated m-tetramethyl xylene isocyanate (sold by American Cyanamid as TMI®). Yet another technique is to react the cyclic carbonate group on a cyclic carbonate-functional acrylic with ammonia in order to form the carbamate-functional acrylic. Cyclic carbonate-functional acrylic polymers are known in the art and are described, for example, in U.S. Patent 2,979,514. A more difficult, but feasible way of preparing the polymer would be to trans-esterify an acrylate polymer with a hydroxyalkyl carbamate.

The polymer (a) will generally have a molecular weight of 2000-20,000, and preferably from 4000-6000. Molecular weight can be determined by the GPC method using a polystyrene standard. The carbamate content of the polymer, on a molecular weight per equivalent of carbamate functionality, will generally be between 200 and 500, and preferably between 300 and 350. The glass transition temperature, Tg, of components (a) and (b) can be adjusted to achieve a cured composition having the Tg for the particular application involved. In the case of a coating, the average Tg of unreacted components (a) and (b) should be between 10°C and 80°C, with the individual T_{g}'s being adjusted to achieve optimum performance.

The polymer component (a) is represented by the randomly repeating units according to the following formula: 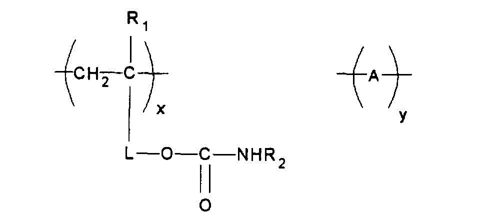 In the above formula, R₁ represents H or CH₃. R₂ represents H, unsubstituted alkyl, preferably of 1 to 6 carbon atoms, or cycloalkyl, preferably up to 6 ring carbon atoms, or alkyl or cycloalkyl substituted with substituents that do not form ether linkages upon reaction of components (a) and (b). Substituents that will have an adverse impact on the properties of the cured material, however, are to be avoided. Ether linkages are thought to be susceptible to hydrolysis, and should be avoided in locations that would place the ether linkage in the crosslink matrix.

The values x and y represent weight percentages, with x being 10 to 90 % and preferably 40 to 60 %, and y being 90 to 10 % and preferably 60 to 40 %.

In the formula, A represents repeat units derived from one or more ethylenically unsaturated monomers. Such monomers for copolymerization with acrylic monomers are known in the art. They include alkyl esters of acrylic or methacrylic acid, e.g., ethyl acrylate, butyl acrylate, 2-ethylhexyl acrylate, butyl methacrylate, isodecyl methacrylate, hydroxyethyl methacrylate, or hydroxypropyl acrylate; and vinyl monomers such as unsaturated m-tetramethyl xylene isocyanate (sold by American Cyanamid as TMI®), styrene, or vinyl toluene.

L represents a divalent linking group, preferably an aliphatic of 1 to 8 carbon atoms, cycloaliphatic, or aromatic linking group of 6 to 10 carbon atoms. Examples of L include 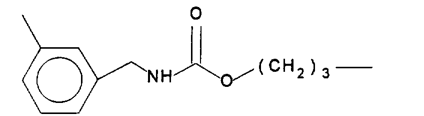 -(CH₂)-, -(CH₂)₂-, or -(CH₂)₄-.

In one preferred embodiment, -L- is represented by -COO-L'-where L' is a divalent linking group. Thus, in a preferred embodiment of the invention, the polymer component (a) is represented by randomly repeating units according to the following formula:

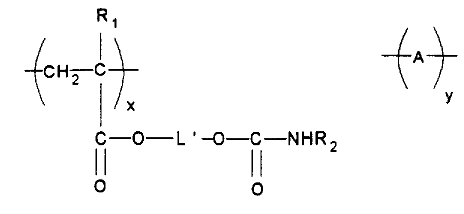

In this formula, R₁, A, x, and y are as defined above. R₂ represents H, an unsubstituted alkyl group of 1 to 6 carbon atoms or an unsusbstituted cycloalkyl group. L' may be a divalent aliphatic linking group, preferably of 1 to 8 carbon atoms, e.g., -(CH₂)-, -(CH₂)₂-, or -(CH₂)₄-, or a divalent cycloaliphatic linking group, preferably up to 8 carbon atoms, e.g., cyclohexyl.

However, other divalent linking groups can be used, depending on the technique used to prepare the polymer. For example, if a hydroxyalkyl carbamate is adducted onto an isocyanate-functional acrylic polymer, the linking group L would include an -NHCOO-urethane linkage as a residue of the isocyanate group.

The composition of the invention is cured by a reaction of the carbamate-functional polymer component (a) with a component (b) that is a compound having a plurality of functional groups that are reactive with the carbamate groups on component (a). Such reactive groups include active methylol or methylalkoxy groups on aminoplast crosslinking agents or on other compounds such as phenol/formaldehyde adducts, isocyanate groups, siloxane groups, cyclic carbonate groups, and anhydride groups. Examples of (b) compounds include melamine formaldehyde resin (including monomeric or polymeric melamine resin and partially or fully alkylated melamine resin), urea resins (e.g., methylol ureas such as urea formaldehyde resin, alkoxy ureas such as butylated urea formaldehyde resin), polyanhydrides (e.g., polysuccinic anhydride), and polysiloxanes (e.g., trimethoxy siloxane). Aminoplast resins such as melamine formaldehyde resins or urea formaldehyde resins are especially preferred. Even more preferred are aminoplast resins where one or more of the amine nitrogens is substituted with a carbamate group for use in a process with a curing temperature below 150°C.

The curable composition of the invention may be utilized in a variety of applications, such as castings, moldings, and coatings. A solvent may optionally be utilized in the composition of the present invention. Although the composition of the present invention may be utilized, for example, in the form of solid powder, or a dispersion, it is often desirable that the composition is in a liquid state, which can be accomplished with the use of a solvent. This solvent should act as a solvent with respect to both the carbamate-functional polymer (a) as well as the component (b). In general, depending on the solubility characteristics of components (a) and (b), the solvent can be any organic solvent and/or water. In one preferred embodiment, the solvent is a polar organic solvent. More preferably, the solvent is a polar aliphatic solvent or polar aromatic solvent. Still more preferably, the solvent is a ketone, ester, acetate, aprotic amide, aprotic sulfoxide, or aprotic amine. Examples of useful solvents include methyl ethyl ketone, methyl isobutyl ketone, n-amyl acetate, ethylene glycol butyl ether-acetate, propylene glycol monomethyl ether acetate, xylene, n-methylpyrrolidone, or blends of aromatic hydrocarbons. In another preferred embodiment, the solvent is water or a mixture of water with small amounts of aqueous co-solvents.

The composition of the invention may include a catalyst to enhance the cure reaction. For example, when aminoplast compounds, especially monomeric melamines, are used as component (b), a strong acid catalyst may be utilized to enhance the cure reaction. Such catalysts are well-known in the art and include, for example, p-toluenesulfonic acid, dinonylnaphthalene disulfonic acid, dodecylbenzenesulfonic acid, phenyl acid phosphate, monobutyl maleate, butyl phosphate, and hydroxy phosphate ester. Other catalysts that may be useful in the composition of the invention include Lewis acids, zinc salts, and tin salts.

In a preferred embodiment of the invention, the composition of the invention is utilized as a coating composition. In such a composition, the solvent may be present in the composition of the invention in an amount of from 0.01 weight percent to 99 weight percent, preferably from 10 weight percent to 60 weight percent, and more preferably from 30 weight percent to 50 weight percent.

Coating compositions can be coated on the article by any of a number of techniques well-known in the art. These include, for example, spray coating, dip coating, roll coating, or curtain coating. For automotive body panels, spray coating is preferred.

In a particularly preferred embodiment, the composition of the invention is used as a clear and/or colorless coating composition over a pigmented basecoat as part of a composite color-plus-clear coating. Such composite coatings are popular for their depth of color and liquid glossy surface appearance. They have found particularly wide acceptance in the field of automotive coatings. The composition of the invention may also be used as the basecoat of a composite color-plus-clear coating. Other pigmented basecoat compositions for such composite coatings are well-known in the art, and do not require explanation in detail herein. Polymers known in the art to be useful in basecoat compositions include acrylics, vinyls, polyurethanes, polycarbonates, polyesters, alkyds, and polysiloxanes. Preferred polymers include acrylics and polyurethanes. Basecoat polymers are preferably crosslinkable, and thus comprise one or more type of cross-linkable functional groups. Such groups include, for example, hydroxy, isocyanate, amine, epoxy, acrylate, vinyl, silane, and acetoacetate groups. These groups may be masked or blocked in such a way so that they are unblocked and available for the cross-linking reaction under the desired curing conditions, generally elevated temperatures. Useful cross-linkable functional groups include hydroxy, epoxy, acid, anhydride, silane, and acetoacetate groups. Preferred cross-linkable functional groups include hydroxy functional groups and amino functional groups.

Basecoat polymers may be self-cross-linkable, or may require a separate cross-linking agent that is reactive with the functional groups of the polymer. When the polymer comprises hydroxy functional groups, for example, the cross-linking agent may be an aminoplast resin, isocyanate and blocked isocyanates (including isocyanurates), and acid or anhydride functional cross-linking agents.

After an article is molded, casted, or coated with the above-described layers, the composition is subjected to conditions so as to cure the coating layers. Although various methods of curing may be used, heat-curing is preferred. Generally, heat curing is effected by exposing the coated article to elevated temperatures provided primarily by radiative heat sources. Curing temperatures will vary depending on the particular blocking groups used in the cross-linking agents, however they generally range between 93°C and 177°C, and are preferably between 121°C and 141°C. The curing time will vary depending on the particular components used, and physical parameters such as the thickness of the layers, however, typical curing times range from 15 to 60 minutes.

The invention is further described in the following examples.

### Preparation 1 - Carbamate-functional Acrylic

A three-necked 5-1 round bottom flask was fitted with an agitator at the center neck and a thermal couple at one of the side necks to monitor the reaction temperature. A nitrogen purge line was also fed through this neck. The second side neck was fitted with a Claissen adaptor and water cooled condenser.

198 g Urethane-grade mixed aromatics solvent (Solvesso® 100) and 225 g urethane-grade toluene were charged to the flask. The mixture was agitated and heated to reflux with a nitrogen purge. As the mixture reached reflux temperature, 127°C, the nitrogen purge was discontinued.

923 g TMI® (unsaturated m-tetramethyl xylene isocyanate, American Cyanamid), 692 g ethyl hexyl acrylate and 269 g of a 50% solution of t-butyl peracetate in odorless mineral spirits were charged to a separate container. This mixture was pumped to the refluxing solvents over a period of 3.5 hour. At the conclusion of this first feed, a second addition of 27 g of the t-butyl peracetate solution and 27 g urethane grade mixed aromatics were charged over 30 minutes. 8.2 g Urethane-grade mixed aromatics were flushed through the pump and into the reaction mixture after the second initiator feed. The reaction mixture was then held at reflux, 135°C for one hour.

After this hold period, the batch was cooled to 70°C. 1.1 g Dibutyltin dilaurate were charged and mixed into the batch for five minutes. At this point, 565 g hydroxypropyl carbamate were charged to the reaction mixture over 30 minutes. The batch was then slowly heated to 100°C and held at this temperature until isocyanate functionality had disappeared as determined by infrared spectroscopy or titration. Upon the disappearance of the isocyanate, 852 g monobutyl ether of ethylene glycol was charged to the vessel and allowed to homogenize. The heat to the reaction was turned off and the carbamate functional acrylic was removed from the vessel.

### Preparation 2 - Carbamate-modified melamine

A three-necked 5-l round-bottomed flask was fitted with a vacuum sealed agitator at the center neck and a thermocouple at a side neck to monitor the reaction temperature. The second side neck as temporarily fitted with a water cooled condensor. Vacuum was applied through a collecting vessel and supercooled condensor via this side neck of the reaction flask.

1708 g Hexamethoxylated monomeric melamine and 1044 g butyl carbamate were charged to the flask. The mixture was homogenized with agitation while heating slowly to 60°C. As the mixture reached 60°C, 1.2 g dodecylbenzyl sulfonic acid were charged to the vessel. The condensor was removed and the flask fitted to the vacuum set-up. The mixture was heated to 100°C at a rate of 1°C/min. When the mixture reached 70°C, 5,07x10⁴ to 6,75x10⁴ Pa(15-20") vacuum was applied. The methanol was collected as it condensed in the supercooled condensor. A stoichiometric amount of methanol, 279 g, was removed in 2.5 hours at 8,44x10⁴ Pa (25") vacuum and 100°C. After this amount was removed, the heat and vacuum were discontinued. The vessel was charged with 433 g xylene, homogenized, and carbamate-modified melamine separated from the mixture.

### Example 1

A clear coating composition was prepared by combining the following materials:

| | |
|---|---|
| 665 g | carbamated acrylic (Preparation 1) |
| 167 g | carbamated melamine (Preparation 2) |
| 345 g | butyl acetate |
| 44 g | Exxate® 800 (methyl octoate isomers) |
| 19 g | Tinuvin® 384B |
| 6 g | Tinuvin® 123 |
| 12 g | 25% active oxazolidine blocked dodecylbenzyl sulfonic acid |

The coating composition was sprayed over steel panels that had been previously sprayed with an acrylic pigmented basecoat and flashed. Viscosity was adjusted to 30 seconds with butyl acetate. The panels were baked 10 minutes at 82°C and 20 minutes at 132°C.

| | |
|---|---|
| Film builds | basecoat 15 µm, |
| | clearcoat 51 µm, |
| Tukon hardness | 13.5 , |
| MEK rubs | 200, slight scoring. |

### Example 2

A clear coating composition was prepared by combining the following materials:

| | |
|---|---|
| 184 g | carbamated acrylic (Preparation 1) |
| 60 g | hexamethoxylated monomeric melamine |
| 130 g | butyl acetate |
| 14 g | butyl cellosolve acetate |
| 6 g | Tinuvin® 384B |
| 1.9 g | Tinuvin® 123 |
| 3.8 g | 25% active oxazolidine blocked dodecylbenzyl sulfonic acid |

The coating composition was sprayed over steel panels that had been previously sprayed with an acrylic pigmented basecoat and flashed. Viscosity was adjusted to 20 seconds with butyl acetate. The panels were baked 10 minutes at 82°C and 20 minutes at 132°C.
- Film builds:: basecoat 15 µm,
clearcoat 58 µm.

### Preparation 3 - Carbamate-functional Acrylic

A three-necked 5-l round bottom flask was fitted with an agitator at the center neck and a thermal couple to monitor the reaction temperature at one of the side necks. A nitrogen purge/sparge line was also fed through this neck. The second side neck was fitted with a Claissen adaptor and water-cooled condenser.

235 g Xylene and 356 g amyl acetate were charged to the flask. The mixture was agitated and heated to reflux with a nitrogen purge. As the mixture reached reflux, 143°C, the nitrogen purge was discontinued. 301 g Styrene, 196 g ethylhexyl acrylate, 337 g ethylhexyl methacrylate 445 g hydroxyethyl methacrylate, 226 g cyclohexyl methacrylate, 123 g of a 50% solution of t-butyl peracetate in odorless mineral spirits, and 116 g xylene were charged to a separate container. This mixture was pumped to the refluxing solvent over a period of four hours. At the conclusion of this feed, 35 g xylene was added through the pump and into the reaction mixture. The reaction mixture was held at reflux, 140°C, for one hour.

The mixture was cooled to 120°C and charged with 205 g urea. The temperature dropped as the urea dissolved. The reaction mixture was slowly heated to 150°C and held for the remainder of the synthesis.

The vessel was then charged with 2 g of King Industry catalyst Nacure® XP-348 (metal carbamate). At this point, the reaction was sparged with nitrogen to facilitate the evacuation of ammonia formed from the thermal decomposition of the urea.

Incremental additions of the catalyst (0.5 g) were added once an hour. The reaction was monitored for the disappearance of hydroxyl by titration. When no hydroxyl was detected by titration, the nitrogen sparge and heat were cut, and 560 g methyl isobutyl ketone was added to the mixture. The mixture was homogenized, followed by separation of the polymer.

### Example 3

A coating composition was formed by blending 50 g of the carbamate-functional acrylic from Preparation 3, 7.7 g hexamethoxylated monomeric melamine, and 0.6 g oxazolidine-blocked dodecylbenzyl sulfonic acid. The composition was coated onto a glass plate, followed by vacuum drawdown to form an 200 µm-thick layer. The cured coating was baked at 132°C for 30 minutes. The coating passed a test of 200 MEK rubs.

## Claims

1. A curable composition comprising:
(a) a first component comprising a carbamate group-containing polymer according to the formula: 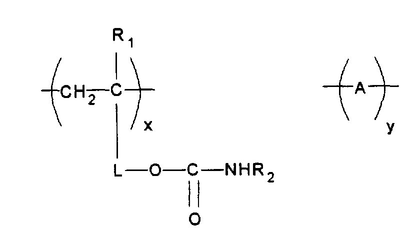 wherein R₁ represents H or CH₃, R₂ represents H, unsubstituted alkyl, or cycloalkyl, or alkyl or cycloalkyl substituted with substituents that do not form ether linkages upon reaction of components (a) and (b), L represents a divalent linking group, A represents repeat units derived from one or more other ethylenically unsaturated monomers, x represents 10 to 90 weight percent, and y represents 90 to 10 weight percent with x + y equal to 100 weight percent, and
(b) a second component comprising a compound having a plurality of functional groups that are reactive with said carbamate group.

2. A curable composition according to claim 1,
wherein said polymer (a) is obtainable by polymerisation of acrylic monomer having a carbamate group with other ethylenically unsaturated monomers.

3. A curable composition according to claims 1 or 2,
wherein component (b) comprises a compound having a plurality of functional groups selected from the group consisting of active methylol, or methylalkoxy, isocyanate, siloxane, cyclic carbonate, and anhydride groups.

4. A curable composition according to claim 3,
wherein the active methylol or methylalkoxy groups are on aminoplast crosslinking agents or on phenol/formaldehyde adducts.

5. A curable composition according to claims 3 or 4,
wherein component (b) comprises a compound selected from the group consisting of aminoplast resins, polysiloxanes, and polyanhydrides.

6. A curable composition according to claim 5,
wherein component (b) is an aminoplast resin.

7. A curable composition according to claim 6,
wherein said aminoplast resin is melamine formaldehyde resin.

8. A curable composition according to claim 7,
wherein said aminoplast formaldehyde resin is fully or partially alkylated.

9. A curable composition according to claims 1 to 8,
wherein R₁ represents CH₃.

10. A curable composition according to claims 1 to 9,
wherein x represents 40 to 60 weight percent and y represents 60 to 40 weight percent.

11. A curable composition according to claims 1 to 10,
wherein -L- is represented by the formula -COO-L'-where L' is a divalent linking group.

12. A curable composition according to claims 1 to 11,
wherein the composition is a coating composition.

## Patentansprüche

1. Härtbare Zusammensetzung, enthaltend:
(a) als erste Komponente ein Carbamatgruppen enthaltendes Polymer der Formel: 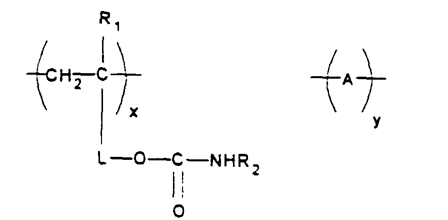 worin R₁ für H oder CH₃, R₂ für H oder gegebenenfalls mit Substituenten, die bei Umsetzung der Komponenten (a) und (b) keine Etherbrücken bilden, substituiertes Alkyl oder Cycloalkyl, L für eine zweiwertige Brückengruppe, A für Wiederholungseinheiten, die sich von einem oder mehreren anderen ethylenisch ungesättigten Monomeren ableiten, x für 10 bis 90 Gewichtsprozent und y für 90 bis 10 Gewichtsprozent, wobei x + y gleich 100 Gewichtsprozent ist, steht, und
(b) als zweite Komponente eine Verbindung mit mehreren gegenüber der Carbamatgruppe reaktiven funktionellen Gruppen.

2. Härtbare Zusammensetzung nach Anspruch 1, wobei das Polymer (a) durch Polymerisation von Acrylmonomeren mit einer Carbamatgruppe mit anderen ethylenisch ungesättigten Monomeren erhältlich ist.

3. Härtbare Zusammensetzung nach Anspruch 1 oder 2, wobei es sich bei der Komponente (b) um eine Verbindung mit mehreren funktionellen Gruppen aus der Gruppe bestehend aus aktiven Methylol- oder Methylalkoxy-, Isocyanat-, Siloxan-, cyclischen Carbonat- und Anhydridgruppen handelt.

4. Härtbare Zusammensetzung nach Anspruch 3, wobei es sich bei den aktiven Methylol- oder Methylalkoxygruppen um an Aminoplast-Vernetzer oder Phenol-Formaldehyd-Addukte gebundene Gruppen handelt.

5. Härtbare Zusammensetzung nach Anspruch 3 oder 4, wobei es sich bei der Komponente (b) um eine Verbindung aus der Gruppe bestehend aus Aminoplastharzen, Polysiloxanen und Polyanhydriden handelt.

6. Härtbare Zusammensetzung nach Anspruch 5, wobei es sich bei der Komponente (b) um ein Aminoplastharz handelt.

7. Härtbare Zusammensetzung nach Anspruch 6, wobei es sich bei dem Aminoplastharz um Melamin-Formaldehyd-Harz handelt.

8. Härtbare Zusammensetzung nach Anspruch 7, wobei das Aminoplast-Formaldehyd-Harz voll- oder teilalkyliert ist.

9. Härtbare Zusammensetzung nach einem der Ansprüche 1 bis 8, wobei R₁ für CH₃ steht.

10. Härtbare Zusammensetzung nach einem der Ansprüche 1 bis 9, wobei x für 40 bis 60 Gewichtsprozent und y für 60 bis 40 Gewichtsprozent steht.

11. Härtbare Zusammensetzung nach einem der Ansprüche 1 bis 10, wobei -L- die Formel -COO-L'-, worin L' für eine zweiwertige Brückengruppe steht, hat.

12. Härtbare Zusammensetzung nach einem der Ansprüche 1 bis 11, bei der es sich um ein Beschichtungsmittel handelt.

## Revendications

1. Composition durcissable comprenant:
(a) un premier composant comprenant un polymère à groupe carbamate selon la formule: 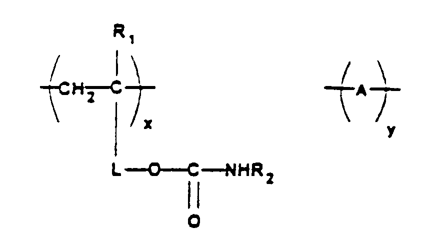 dans laquelle R₁ représente H ou CH₃, R₂ représente H, un alkyle ou cycloalkyle non substitué, ou un alkyle ou cycloalkyle substitué par des substituants qui ne forment pas de liaisons éther par réaction des composants (a) et (b), L représente un groupe de liaison divalent, A représente des motifs récurrents dérivés d'un ou de plusieurs autres monomères éthyléniquement insaturés, x représente de 10 à 90 pour cent en poids, et y représente de 90 à 10 pour cent en poids, x + y étant égal à 100 pour cent en poids, et
(b) un second composant comprenant un composé ayant plusieurs groupes fonctionnels qui sont réactifs vis-à-vis dudit groupe carbamate.

2. Composition durcissable selon la revendication 1, dans laquelle ledit polymère (a) peut être obtenu par polymérisation d'un monomère acrylique ayant un groupe carbamate avec d'autres monomères éthyléniquement insaturés.

3. Composition durcissable selon les revendications 1 ou 2, dans laquelle le composant (b) comprend un composé ayant plusieurs groupes fonctionnels choisis parmi le groupe constitué des groupes méthylol ou méthylalcoxy actifs, isocyanate, siloxane, carbonate cyclique et anhydride.

4. Composition durcissable selon la revendication 3, dans laquelle les groupes méthylol ou méthylalcoxy actifs sont sur des agents de réticulation aminoplastes ou sur des produits d'addition phénol/formaldéhyde.

5. Composition durcissable selon les revendications 3 ou 4, dans laquelle le composant (b) comprend un composé choisi parmi le groupe constitué de résines aminoplastes, de polysiloxanes et de polyanhydrides.

6. Composition durcissable selon la revendication 5, dans laquelle le composant (b) est une résine aminoplaste.

7. Composition durcissable selon la revendication 6, dans laquelle ladite résine aminoplaste est une résine mélamine formaldéhyde.

8. Composition durcissable selon la revendication 7, dans laquelle ladite résine de formaldéhyde aminoplaste est entièrement ou partiellement alkylée.

9. Composition durcissable selon les revendications 1 à 8, dans laquelle R₁ représente CH₃.

10. Composition durcissable selon les revendications 1 à 9, dans laquelle x représente de 40 à 60 pour cent en poids et y représente de 60 à 40 pour cent en poids.

11. Composition durcissable selon les revendications 1 à 10, dans laquelle -L- est représenté par la formule -COO-L'- dans laquelle L' est un groupe de liaison divalent.

12. Composition durcissable selon les revendications 1 à 11, la composition étant une composition de revêtement.
